# EUROPEAN PATENT SPECIFICATION

(11) **EP 4 223 694 B1**
(45) Date of publication and mention of the grant of the patent: **25.06.2025**
(21) Application number: 23154483.4
(22) Date of filing: 01.02.2023
(51) Int. Cl.: C01B 32/991, B82Y 30/00, B82Y 40/00

(54) **METHOD OF OBTAINING BORON CARBIDE NANOPARTICLES**
VERFAHREN ZUR HERSTELLUNG VON BORKARBID-NANOPARTIKELN
PROCÉDÉ DE FABRICATION DE NANOPARTICULES DE CARBURE DE BORE

(30) Priority: 07.02.2022 PL 44031022
(43) Date of publication of application: 09.08.2023
(73) Proprietor: Akademia Gorniczo-Hutnicza im. Stanislawa Staszica w Krakowie, 30-059 Krakow (PL)
(72) Inventor: KOZIEN, Dawid, 31-586 Kraków (PL); PEDZICH, Zbigniew, 30-619 Kraków (PL); JELEN, Piotr, 32-050 Skawina (PL)
(74) Representative: Augustyniak, Magdalena Anna

(56) References cited:
- WO-A2-2008/102357
- DATABASE WPI Week 2020065, Derwent World Patents Index; AN 2020-671784, XP002809556
- DATABASE WPI Week 201989, Derwent World Patents Index; AN 2019-88847M, XP002809557
- DATABASE WPI Week 201673, Derwent World Patents Index; AN 2016-586104, XP002809558

## Description

The subject of the invention is a method of obtaining boron carbide nanoparticles, intended especially for producing of wear-resistant machine parts and devices.

As is known from scientific publications, among others F. Thévenot, titled: "Boron carbide - A comprehensive review", Journal of the European Ceramic Society, 1990, vol.6 (4), boron carbide occurs in the form of numerous crystalline phases. The general formula of boron carbide is presented as BₙCₘ, where n comprises the ranges: 24-2.57, 11.5-4, 6.5-4, 9-4 and 10.1-4, m takes the values 1-3, and the most often occurring phases are B₆C, B₂C₂, BC, B₃C, B₇C, B₁₂C, B₅₀C₂, B₁₃C₃ and B₁₃C₂. Boron carbide powders are used, among others, to produce dense, polycrystalline sinters, which have found a number of industrial applications due to their specific properties, such as extreme hardness (28-35 GPa), relatively low density (~2.52 g/cm³), high Young's modulus (450-470 GPA) and high chemical resistance.

Boron carbide powders are currently synthesized by a number of methods, among others, by carbothermic reduction, magnesothermic reduction, synthesis from elements, gas phase synthesis, synthesis from polymer precursors, liquid phase reaction, ion beam synthesis, VLS method (Vapour-Liquid-Solid Growth). A commonly used method for synthesis of boron carbide is synthesis by carbothermic reduction, which uses boric acid H₃BO₃ as a boron precursor and petroleum coke as a carbon precursor. The optimum ratio of boric acid to petroleum coke is 1:8. At higher boron to carbon ratios, achieving pure powder without the addition of free carbon is possible, however due to the excessive boron content and its melting point, recovery of the achieved boron carbide powder from the furnace is impossible, due to fusion of the powders into the graphite crucibles. The addition of a small amount of sodium chloride is then usually used: 1-5% by weight, which significantly improves the process yield by lowering the content of residual free carbon and at the same time reducing the energy requirement by 20%. Unfortunately, simultaneously during the direct synthesis of boron-enriched boron carbide, there is a loss of boron in the furnace, which causes the contamination of the reactor and the losses of a raw material. For this reason, this process has not found wider application in the commercial synthesis of boron carbide. The boron carbide powders obtained by this method are characterized by a particle size above 1 µm and very often contain unreacted boron.

A method for producing submicron sized boron carbide powder from boric acid H₃BO₃ or boron oxide B₂O₃ is known from patent specification US4804525A, and the carbon source useful for the B₄C synthesis is any carbon-containing material that will form carbon when heated. The carbon source used during the synthesis must be characterized by high purity and does not contain heavy metals (Fe, Cr, Ni), their content is maximum of 500 ppm, and the most preferable concentration is below 200 ppm. Increasing the chemical purity of boron carbide requires the removal of residual carbon remaining after synthesis. To eliminate carbon in the synthesis products, an excess of B₂O₃ is used in the reaction to minimize the carbon content to 1% in the achieved powder. After synthesis, B₂O₃ is recycled or reused to the synthesis of of boron carbide.

Another known method, is a synthesis of boron carbide from boron and carbon powders, which are heated and next comminuted. For example, patent description US3914371A discloses a method for producing of boron carbide with different stoichiometric configurations. The synthesis method is characterized by mixing 78% by weight of boron particles and 22% by weight of carbon, in the temperature range from 1250 to 1700°C, with heating rate from 100 to 200°C, over a period of 1 hour. The boron carbide particles obtained in this manner can be used to produce dense sinters by hot pressing at the temperature in the range from 1800 to 2000°C.

Document CN111377449A discloses a method for preparing boron carbide nanoparticles. The process involves heating and reducing boron powder, which serves as the raw material, and a carbon material, which acts as a reducing agent, together with a transition metal inorganic salt serving as a catalyst in a furnace to generate B4C nanoparticles. The molar ratio of boron powder to carbon material ranges from 1: 1 to 20: 1. Additionally, a transition metal inorganic salt catalyst with a mass fraction of 1-60% is added. The components are then ultrasonically mixed uniformly, dried, and heated in a high-temperature furnace to obtain the final product.

Document WO2008102357A2 discloses a process for the preparation of boron carbide (B₄C) comprising the step of carbidizing boron oxide, whereby: a. said carbidizing comprises heating boron oxide and carbon particles in an inert atmosphere, at a temperature not to exceed 1900 °C; and b. said carbon particles have a diameter which does not exceed 50 nm.

Document CN110357106A discloses a method for preparing nano twinned boron carbide powder by using boric acid and carbon source, adding to deionized water, stirring, heating to dryness, grinding, placing in graphite crucible in furnace, heating and finally cooling the resulting powder.

Document CN105924175A discloses a method for preparing a fine-grained boron carbide ceramic, comprising the steps of:
1) According to the weight percentage, 78-79% of boron powder and 21-22% of carbon powder are weighed as raw materials, and after mechanical chemical treatment, amorphous BC nanopowders are obtained; wherein the mechanochemical treatment step adopts a ball milling process, ball milling. The process is as follows: the mass ratio of the ball is 20:1-40: 1, the rotation speed of the ball mill is 300-500 rpm, the ball milling time is 30-50 h. and the whole ball milling process is carried out in an inert atmosphere;
2) The obtained amorphous B-C nanopowder is pressed into an inner billet;
3) According to the weight percentage, weigh 18%-20% of carbon powder, 72%-80% of titanium powder, 0-10% of titanium carbide powder, and mix evenly to obtain raw material powder of self -propagating system;
4) The raw material powder obtained in the step 2) is externally wrapped with the raw material powder of the self -propagating system obtained in the step 3) and pressed into a composite, and then the self -propagating reaction is ignited, and the pressing is immediately pressed after the reaction is completed until the temperature of the reaction system is lower than 1200 °C. After releasing the pressure, after cooling, the boron carbide bulk material is obtained;
5) The boron carbide bulk material obtained in the step 4) is subjected to heat treatment to obtain a fine-grained boron carbide ceramic.

Although many methods of boron carbide synthesis are known and used, most of them do not allow to achieve a high purity powder. A tremendous problem of the currently used synthesis methods is, in particular, high agglomeration and aggregation of the obtained products after synthesis with particle size above 3-5 µm. For this reason, intensive mechanical processing of the achieved powders is necessary, which in turn causes their significant contamination with iron molecules, associated with the use of steel grinding mediums for milling hard agglomerates. Commercially achieved boron carbide powders are characterized by a purity of 96-98% and a particle size above 1 µm. Long-term purification methods, generate increase of production costs and make it impossible to achieve boron carbide particles with a size below 1 µm, despite increased milling time. Products achieved from such powders have a low density and are porous, which in turn leads to their low strength and poor resistance to brittle cracking.

The aim of the invention is to achieve boron carbide particles of submicron size (less than 1 µm) and high purity, not achievable previously by methods commonly used, what will improve the properties of products obtained from these powders and increase the possibilities of its application.

The gist of the method of obtaining boron carbide nanoparticles by direct synthesis process from boron and carbon powders, which are heated at the temperature of 1400-1700°C and next comminuted, is characterized by the fact that in a graphite crucible, on a graphite pad, the following are placed successively: a layer of amorphous boron powder, and next a layer of carbon in the form of amorphous carbon black, wherein the ratio of amorphous boron to amorphous carbon black is 4:1 by weight, and all of it is heated for 10 minutes to 4 hours. From the obtained, according to the kinetics of the reaction, bed of the product being in the form of three clearly distinguishable layers, the top two layers are poured down and recycled and/or returned as a raw material for the re-synthesis of boron carbide, and the layer located at the lowest, near the bottom of the crucible, distinguished by a light gray colour and showing the greatest compactness and hardness, is subjected to intensive milling using steel elements in an isopropanol environment for a period of 6 to 24 hours, and next is subjected to chemical etching in order to wash out impurities in the form of iron ions derived from milling , using successively: concentrated HCl, next concentrated HNO₃ and again concentrated HCl. The obtained powder is subjected to repeated washing out using distilled water until achieving pH of the suspension from 6.5 to 7.5, and in the final step the suspension is subjected to intensive centrifugation at speed from 5000 to 12000 rpm, with centrifugation time from 5 minutes to 4 hours, achieving rounded off grains of boron carbide from 50 to 200 nm in size.

The method according to the invention allows to achieve boron-rich boron carbide powder having high purity and small grain size (below 1 µm), with rounded off shapes. The advantage of the proposed solution is the possibility to precisely control the morphology of the obtained particles through the parallel use of milling and chemical etching. The obtained powder, due to size and shape of the grains, can significantly improve the sinterability of boron carbide-based composites intended for producing of wear-resistant machine parts and devices. These features are also beneficial for medical applications, such as drug carriers. Furthermore, the configuration of the substrates bed allows for complete utilization of boron during synthesis and does not cause furnace contamination resulting from increased boron vapor pressure, since all boron reacts with carbon monoxide during synthesis, which is assured by a layer of carbon black over a layer of boron and it is visible as synthesis effect.

The method of obtaining boron carbide nanoparticles according to the invention, is explained below in practical embodiments and in the figure, in which fig. 1 shows the XRD phase analysis of boron carbide obtained by the method described in example 1, fig. 2 - a transmission electron microscope (TEM) image of boron carbide powder obtained by the method described in example 1, fig. 3 - the XRD phase analysis of boron carbide obtained by the method described in example 2, and fig. 4 - the transmission electron microscope (TEM) image of boron carbide powder obtained by the method described in example 2.

### Example 1

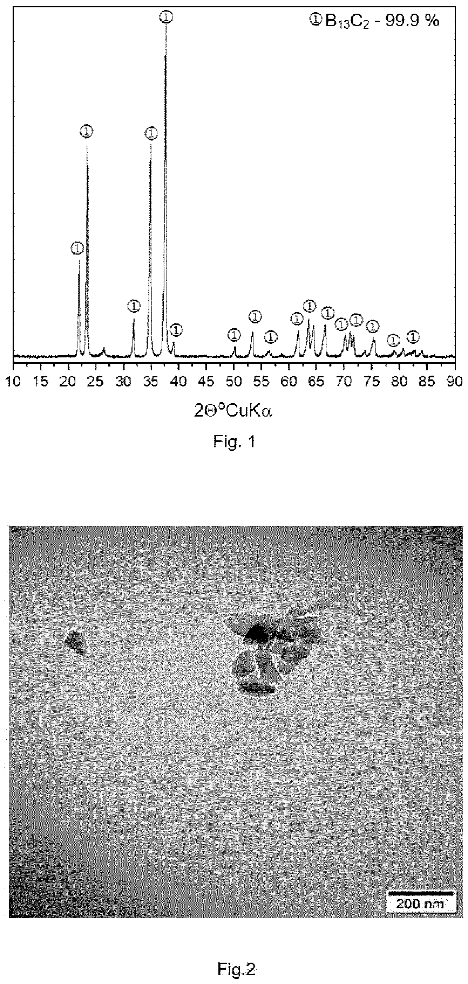

The following powders were prepared: amorphous boron (Sigma Aldrich p.a.) and technical carbon black P-803 (Thujmazy). A phase composition analysis performed showed that the commercial boron powder consisted of 3 phases: beta boron (card number 98-004-3431 according to ISCD database), boric acid (card number 98-002-4711 according to the ICSD database) and boron (card number 98-002-2300 according to ICSD database), while the carbon black was fully amorphous. Direct synthesis from the above-mentioned powders was used to produce boron carbide. A graphite pad was placed at the bottom of the graphite crucible, a layer of amorphous boron powder in the amount of 12 g was placed on it, and next, after levelling the surface, a layer of amorphous carbon black in the amount of 3 g. This procedure simultaneously reduces the diffusion of boron in the bed and its loss during synthesis in the furnace. It also has a significant effect on the morphology of the achieved powder because the use of such method of synthesis reduces the agglomeration and aggregation of the resulting boron carbide grains and allows to achieve powder of a high purity. The crucible was placed in the graphite furnace and heated at the temperature of 1650°C under argon atmosphere for 1 hour. The bed containing three layers was achieved. The layer I, located at the lowest, near the bottom of the crucible, was distinguished by its light gray colour and showed clearly greater compactness and hardness than the other layers. The top two layers (layer II and layer III) showed dark gray to black in colour and were characterized by a looser consistency compared to the layer I. The layer III was composed of a loose powder entirely consisting of carbon black as the studies showed. The layer II was recycled and the layer III was returned as a raw material for the re-synthesis of boron carbide. The layer I, in the form of powder with an average particle size of 500 nm, was subjected to intensive milling using steel elements in a rotary-vibrating mill, in an isopropanol environment, for a period of 24 hours. Next the powder was subjected to chemical etching in order to wash out impurities in the form of iron ions derived from milling , using successively: concentrated HCl (38%) for 3 hours, next concentrated HNO₃ (65%) for 3 hours and again concentrated HCl (38%) for 3 hours. The achieved product, as confirmed by the XRD phase analysis (fig. 1), consisted exclusively of the B₁₃C₂ phase, considered the most stable and with a high carbon solubility in the structure, which is particularly important for potential medical applications, and does not possess any of impurities detectable by X-ray diffraction and X-ray fluorescence. Next the product was washed out 7 times using distilled water until achieving pH = 7, after which the obtained suspension was subjected to intensive centrifugation for 45 minutes at 5000 rpm (centrifuge MPW-341, MPW Med. Instruments). A boron carbide powder of almost 100% purity, with rounded off grains, average particle size less than 150 nm was achieved, the TEM image of which is shown in fig. 2.

### Example 2

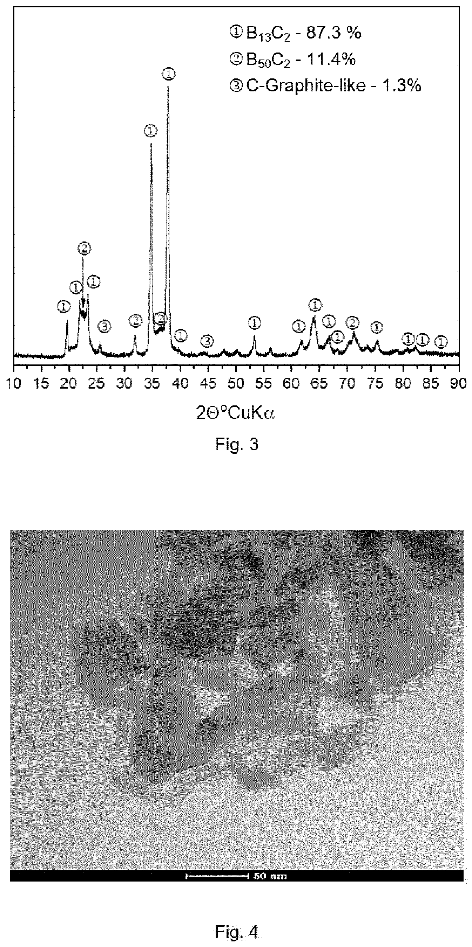

Direct synthesis from the powders described in example 1 was used to produce of boron carbide. A graphite pad was placed at the bottom of the graphite crucible, a layer of amorphous boron powder in the amount of 12 g was placed on it, and next, after levelling the surface, a layer of amorphous carbon black in the amount of 3 g. The crucible was placed in the furnace graphite and heated at the temperature of 1600°C under argon atmosphere for 3 hours. A bed containing three layers, analogous to those described in example 1 was achieved. The layer II was recycled and the layer III was returned as a raw material for the re-synthesis of boron carbide. The layer I, in the form of powder with an average particle size of 500 nm, was subjected to intensive milling using steel elements in a rotary-vibrating mill, in an isopropanol environment, for a period of 24 hours. Then the powder was subjected to chemical etching in order to wash out impurities in the form of iron ions derived from milling , using successively: concentrated HCl (38%) for 3 hours, next concentrated HNO₃ (65%) for 3 hours and again concentrated HCl (38%) for 3 hours. The XRD phase analysis of the achieved product (fig. 3), showed the presence of 3 phases: a rhombohedral boron carbide phase B₁₃C₂ in the amount of 87.3% by weight, a tetragonal boron carbide phase of stoichiometry B₄₈(B₂C₂ in the amount of 11.4% by weight, and a small amount (1.3% by weight) of a graphite-like phase. The product was then washed out 7 times using distilled water until achieving pH = 7, after which the obtained suspension was subjected to intensive centrifugation for 1.5 hours at 10,000 rpm (centrifuge MPW-341, MPW Med. Instruments). The boron carbide powder with a purity of more than 99%, having rounded off grains, an average particle size of less than 85 nm was achieved, the TEM image of which is shown in fig. 4.

## Claims

1. A method of obtaining boron carbide nanoparticles by direct synthesis process from boron and carbon powders, which are heated at the temperature of 1400-1700°C and next comminuted **characterized in that** in a graphite crucible, on a graphite pad, the following are placed successively: a layer of amorphous boron powder, and next a layer of carbon in the form of amorphous carbon black, wherein a ratio of amorphous boron to amorphous carbon black is 4:1 by weight, and all of it is heated for 10 minutes to 4 hours, after which from the obtained bed of the product in the form of three clearly distinguishable layers, the top two layers are poured down and undergo recycling and/or are returned as a raw material to the re-synthesis of boron carbide, and the layer at the lowest, near the bottom of the crucible, distinguished by its light gray colour and showing the greatest compactness and hardness, is subjected to intensive milling using steel elements in an isopropanol environment for a period of 6 to 24 hours, and next is subjected to chemical etching to wash out impurities in the form of iron ions derived from milling , using successively: concentrated HCl, next concentrated HNO₃ and again concentrated HCl, after which the obtained powder is subjected to repeated washing out using distilled water until achieving pH of the suspension from 6.5 to 7.5, and in final step, the suspension is subjected to intensive centrifugation at a speed of 5000 to 12000 rpm, with a centrifugation time from 5 minutes to 4 hours, achieving rounded off grains of boron carbide from 50 to 200 nm in size.

## Patentansprüche

1. Verfahren zur Gewinnung von Borcarbid-Nanopartikeln durch Direktsynthese aus Bor- und Kohlenstoffpulvern, die auf 1400-1700°C erhitzt und anschließend zerkleinert werden, **dadurch gekennzeichnet, dass** in einem Graphittiegel auf eine Graphitunterlage nacheinander wie folgt aufgebracht wird: eine Schicht amorphes Borpulver und dann eine Schicht Kohlenstoff in Form von amorphem Ruß, wobei ein Gewichtsverhältnis von amorphem Bor zu amorphem Ruß 4:1 beträgt, und das Ganze von 10 Minuten bis 4 Stunden erhitzt wird, und dann aus dem entstandenen Produktbett in Form von drei deutlich unterscheidbaren Schichten, die beiden oberen Schichten abgegossen werden und der Rückgewinnung unterzogen werden und/oder als Rohstoff für die Borcarbid-Wiedersynthese zurückgeführt werden, und die unterste Schicht, nahe dem Tiegelboden, die sich durch ihre hellgraue Farbe auszeichnet und die größte Dichte und Härte aufweist, dem intensiven Mahlen mithilfe der Stahlelementen in einer Umgebung von Isopropylalkohol für einen Zeitraum von 6 bis 24 Stunden unterzogen wird und dann dem chemischen Ätzen unterzogen wird, um die in Form von Eisenionen aus dem Mahlen stammenden Verunreinigungen auszuwaschen, wobei nacheinander konzentrierte HCl, dann konzentrierte HNO₃ und erneut konzentrierte HCl verwendet werden, wonach das erhaltene Pulver wiederholt mit destilliertem Wasser ausgewaschen wird, bis ein pH-Wert der Suspension von 6,5 bis 7,5 erreicht wird, und im letzten Schritt, die Suspension einer intensiven Zentrifugation bei einer Geschwindigkeit von 5000 bis 12000 U/min mit einer Dauer von 5 Minuten bis 4 Stunden unterzogen wird, wodurch abgerundete Körner von Borcarbid mit einer Größe von 50 bis 200 nm erhalten werden.

## Revendications

1. Procédé d'obtention de nanoparticules de carbure de bore par synthèse directe à partir de poudres de bore et de carbone, chauffées à une température de 1 400 à 1 700 °C, puis broyées, le procédé **caractérisé en ce que,** dans un creuset en graphite, sur un support en graphite, on place successivement : une couche de poudre de bore amorphe, puis une couche de carbone sous forme de noir de carbone amorphe, le rapport bore amorphe/noir de carbone amorphe étant de 4:1 en poids, et le tout est chauffé pendant 10 minutes à 4 heures, après quoi, à partir du lit obtenu, sous forme de trois couches clairement distinctes, les deux couches supérieures sont coulées et recyclées et/ou utilisées comme matière première pour la resynthèse du carbure de bore, et la couche la plus basse, près du fond du creuset, **caractérisée par** sa couleur gris clair et présentant la plus grande compacité et dureté, est soumise à un broyage intensif à l'aide d'éléments en acier dans l'environnement d'isopropanol pendant une période de 6 à 24 heures, et puis est soumis à une gravure chimique pour éliminer les impuretés sous forme d'ions fer dérivés du broyage, en utilisant successivement : HCl concentré, puis HNO₃ concentré et à nouveau HCl concentré, après quoi la poudre obtenue est soumise à un lavage répété à l'aide d'eau distillée jusqu'à obtenir un pH de la suspension de 6,5 à 7,5, et dans l'étape finale, la suspension est soumise à une centrifugation intensive à une vitesse de 5000 à 12000 tr/min, avec un temps de centrifugation de 5 minutes à 4 heures, obtenant des grains arrondis de carbure de bore de 50 à 200 nm de taille.
